# EUROPEAN PATENT APPLICATION

(11) **EP 4 610 867 A2**
(43) Date of publication of application: **03.09.2025**
(21) Application number: 25176228.2
(22) Date of filing: 08.06.2020
(51) Int. Cl.: G06F 21/64

(54) **SYSTEMS AND METHODS FOR PROCESSOR VIRTUALIZATION**

(30) Priority: 07.06.2019 US 201962858623 P
(62) Divisional of application: 20819462.1
(71) Applicant: Lockheed Martin Corporation, Bethesda, MD 20817-1877 (US)
(72) Inventor: HINNERSHITZ, Scott Edwin, Maryland (US); LOPEZ, David Jose, Maryland (US); KAUL, Jason Todd, Maryland (US); SMITH, Michael Lane, Maryland (US)
(74) Representative: Finnegan Europe LLP

(57) **Abstract**

A system for secure processor virtualization including a secure initialization memory and one or more processors coupled to the secure initialization memory is disclosed. The secure initialization memory includes initialization instructions for launching a security runtime environment before operating systems and cryptographic keying for security handoffs. The processors are configured to retrieve the initialization instructions from the secure initialization memory at startup, execute the initialization instructions to launch the security runtime environment and retrieve at least a portion of the cryptographic keying, and generate specific keying for chip-level resources the processors by combining instruction sets of the chip-level resources and the cryptographic keying. The processors are further configured to initialize a plurality of isolated enclaves on the security runtime environment and pin chip-level resources to the plurality of enclaves according to the specific keying and by establishing exclusive cryptographic links between the chip-level resources and the plurality of enclaves.

## Description

### Cross Reference to Related Applications

This application claims the benefit of priority of U.S. Provisional Application No. 62/858,623 filed June 7, 2019.

### Technical Field

Embodiments of the present disclosure include systems and methods for processor virtualization, and more particularly, to systems and methods to generate a chip-level security runtime environment by implementing a virtualization layer when the processor boots up.

### Background

Generally, platform virtualization may be used to separate software from underlying hardware resources. For example, using KVM (Kernel-based Virtual Machine) or XEN, multiple virtual machines can be executed on the same hardware concurrently, allowing the isolation of software and formation of security layers. In typical virtualization solutions, however, the different virtual machines may share hardware resources. Virtual machines may be operating with different operating systems, but the virtual machines may still share processor resources. This arrangement may expose users to attacks that exploit device layer processes, such as Spectre and Meltdown.

The disclosed systems and methods for processor virtualization and their hardware components are directed to improvements in the existing technology.

### Summary

One aspect of the present disclosure is directed to a system for secure processor virtualization. The system may include a secure initialization memory including initialization instructions for launching a security runtime environment before operating systems and cryptographic keying for security handoffs. The system may also include one or more processors coupled to the secure initialization memory and configured to perform operations. The operations may include retrieving the initialization instructions from the secure initialization memory at startup, executing the initialization instructions to launch the security runtime environment and retrieve at least a portion of the cryptographic keying from the secure initialization memory, and generating specific keying for chip-level resources in the one or more processors by combining instruction sets of the chip-level resources and the cryptographic keying. The operations may also include initializing a plurality of isolated enclaves on the security runtime environment and pinning the chip-level resources to the plurality of enclaves according to the specific keying and by establishing exclusive or independent cryptographic links between the chip-level resources and the plurality of enclaves.

Another aspect of the present disclosure is directed to a computer-implemented method for processor virtualization. The method may include retrieving (from a secure initialization memory) initialization instructions for launching a security runtime environment at startup before initializing operating systems, executing the initialization instructions to launch the security runtime environment and retrieve at least a portion of cryptographic keying for security handoffs from the secure initialization memory, and generating specific keying for chip-level resources in one or more processors by combining instruction sets of the chip-level resources and the cryptographic keying. Further, the method may also include initializing a plurality of isolated enclaves on the security runtime environment and pinning the chip-level resources to the plurality of enclaves according to the specific keying and by establishing exclusive cryptographic links between the chip-level resources and the plurality of enclaves.

Yet another aspect of the present disclosure is directed to a non-transitory computer-readable medium storing instruction that, when executed by a processor, perform operations for processor virtualization. The operations may include retrieving initialization instructions for launching a security runtime environment at startup before initializing operating systems, executing the initialization instructions to launch the security runtime environment and retrieve at least a portion of cryptographic keying for security handoffs, and generating specific keying for chip-level resources in one or more processors by combining instruction sets of the chip-level resources and the cryptographic keying. Further, the operation may also include initializing a plurality of isolated enclaves on the security runtime environment and pinning the chip-level resources to the plurality of enclaves according to the specific keying and by establishing exclusive cryptographic links between the chip-level resources and the plurality of enclaves.

### Brief Description of the Drawings

FIG. 1 illustrates a block diagram of an exemplary system, consistent with disclosed embodiments.
FIG. 2 illustrates a block diagram of an exemplary processor, consistent with disclosed embodiments.
FIG. 3 illustrates a block diagram of an exemplary enterprise security environment, consistent with disclosed embodiments.
FIG. 4 illustrates a flow chart of an exemplary chip-level security runtime environment (SRE) configuration process, consistent with disclosed embodiments.
FIG. 5 illustrates a flow chart of an exemplary resource binding process, consistent with disclosed embodiments.
FIG. 6 illustrates a flow chart of an exemplary enclave feature disabling process, consistent with disclosed embodiments.
FIG. 7 illustrates a flow chart of an exemplary cryptographical pinning process, consistent with disclosed embodiments.
FIG. 8 illustrates a flow chart of an exemplary processor virtualization process, consistent with disclosed embodiments.
FIG. 9 illustrates a flow chart of an exemplary chip-level resource pinning process, consistent with disclosed embodiments.
FIG. 10 illustrates a block diagram of an exemplary virtualized environment with isolated resources, consistent with disclosed embodiments.

### Detailed Description

Reference will now be made in detail to the exemplary embodiments of the present disclosure described above and illustrated in the accompanying drawings.

The disclosure is directed to systems and methods that may create a chip-level SRE with a virtualization layer separating hardware from software. In some embodiments, the virtualization layer may be set up with a validated initialization process run from a dedicated memory (e.g., a secure initialization memory) with pre-stored virtualization instructions that get executed early during processor start up, before operating systems (OS). In some embodiments, the validated initialization process may include an enforced boot early in a customized BIOS boot process. The virtualization layer may be configured to pin chip resources to specific virtual cores, so users can create multiple workflows that run in isolated domains. With such configurations, the disclosed systems and methods may provide a full-stack security solution that protects from malicious events and minimize exposure to side attacks.

In some embodiments, the disclosed systems and methods may mitigate cyber vulnerabilities, such as speculative execution risk and zero-day attacks, by isolating on-chip hardware components. Moreover, the disclosed systems and methods may provide a platform for cryptographically bound signed code that may only execute the permitted user applications and may be resistant to unauthorized modifications. Further, the creation of a chip-level SRE to host different enclaves or tenants may mitigate information leakage outside of isolated domains and may allow a trusted compartmentalization for user applications. In some embodiments, the disclosed systems and methods may mitigate vulnerabilities in cache attacks, such as Translation Lookaside Buffer (TLB) and Branch Target Buffer (BTB), by isolating Last Level Cache (LLC) and/or timing behaviors between security domains. Moreover, the disclosed systems and methods may separate high-value software content from non-trusted or verified security workloads among shared processor resources.

The disclosed systems and methods may also mitigate risk and safety challenges within highly shared core, memory, interrupts, cache, and Direct Memory Access (DMA) resources. In some embodiments, the disclosed systems and methods may allow users to separate high-value software content from non-trusted or verified security workloads through the hardware firewalling of shared resources. Hardware isolation techniques may be used to create security domains within a protected operating environment. According to embodiments of the present disclosure, processor-shared resources may be firewalled, and runtime security domains may be equipped with cross domain protection against leakage, modification, and privilege escalation.

In some embodiments, methods of the present disclosure may include a mandatory protected boot in which hardware components may be partitioned for resource isolation. By performing the partition early on, the disclosed methods may reduce total code base (TCB) exposure. Other virtualization techniques may use bloated open sourced and insecure code. Methods of the present disclosure may solve issues present in these virtualization techniques because the disclosed methods may minimize exposure and potential attacks. Moreover, the disclosed methods and systems may minimize potential attacks based on hardware vulnerability by eliminating or disabling Option ROM, debug ports, foreign driver code, and/or System Management Modes. Further, the disclosed methods may incorporate cryptographical techniques to enhance security features. In some embodiments, processors may be configured to include a PCI Express manifest that may cryptographically confirm white listing and blacklisting of devices. Such confirmation may support attestation and encrypted communication, may enable trusted guest virtualization for user applications and software portability, and may improve integrity control of hardware and software for critical systems.

The disclosed systems and methods may improve processor security by providing boot and runtime protection of critical applications. The disclosed systems and methods may mitigate vulnerabilities by implementing a virtualization layer when the processor boots up, or close to boot up. Further, the disclosed systems and methods may facilitate an improved secure software stack by creating a secure environment that runs early from a secure initialization memory, such as the BIOS.

The disclosed systems and methods may also improve how the computer operates by creating isolated hardware resource domains that may separate the software from the hardware. The disclosed systems and methods may allow the computer to deploy a layer of security, so users can run multiple tenant workloads inside the same processor and may have one or multiple levels of separation from each other. This separation may improve the computer operation by enhancing security features and reducing exposure to potential attacks that seek to collect information or identify behaviors. Moreover, the disclosed systems and methods may allow the computer to perform new operations, such as hosting virtual machines using a hypervisor without a scheduler and with ring separation for security, pinning of the virtualization host kernel within cache memory of the processor cores, and passing unique cryptographic information to each individual virtual machine guest during the boot process.

For example, some embodiments of the disclosed systems and methods may allow the virtualization of multi-core processors that comply with safety and/or security certifications without Quality of Service (QoS) detriments. Certain industrial control systems require safety certifications that guarantee system integrity. In response, some security and/or safety solutions have opted to comply with certification conditions by preventing parallelization and, for example, disabling cores of multi-core processors. These shortcut solutions, however, result in QoS decrements and higher costs to meet certification requirements for safety-critical applications. The disclosed systems and methods provide tools for processor virtualization that facilitate meeting safety certifications without losing QoS capabilities because the disclosed systems and methods provide hardware isolation by exclusively mapping or pinning resources to specific workflows. Isolated workflows and processor components achieve the goals of safety and security without losing processing resources. Therefore, the disclosed systems and methods may facilitate separation of multi-core processors that meet safety certification requirements.

Moreover, the disclosed systems and methods may improve the technical field of processor security by providing initialization and/or boot protections. For instance, in accordance with an embodiment of the present disclosure, a system may create a chip-level security runtime environment (SRE) by implementing a virtualization layer before any OS starts interacting with chip-level resources. In one embodiment, the SRE may implement the visualization layer when the processor boots up. The system may include one or more processors and one or more storage devices storing instructions that, when executed, may configure the one or more processors to perform operations. The operations may include retrieving, from a secure initialization memory, a cryptographic keying for a security handoff and instructions for validated enforced boot, launching a protected SRE to operate the processor based on the initialization operations, pinning chip resources to specific virtual cores that work in isolated domains in the SRE, and binding user applications to the virtualized cores using hardware resource IDs to perform isolated workflows. In some embodiments, the operations may also include enforcing firewall policies to access processor resources and disabling processor features, such as option ROM, system management mode, and/or debug ports.

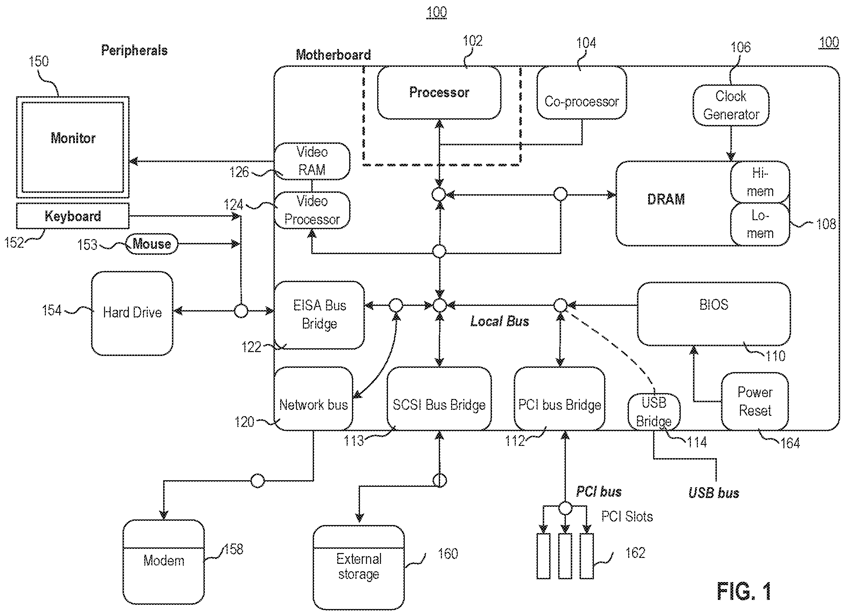

FIG. 1 is a block diagram of an exemplary system 100, consistent with disclosed embodiments. As shown in FIG. 1, system 100 may include a motherboard and peripherals.

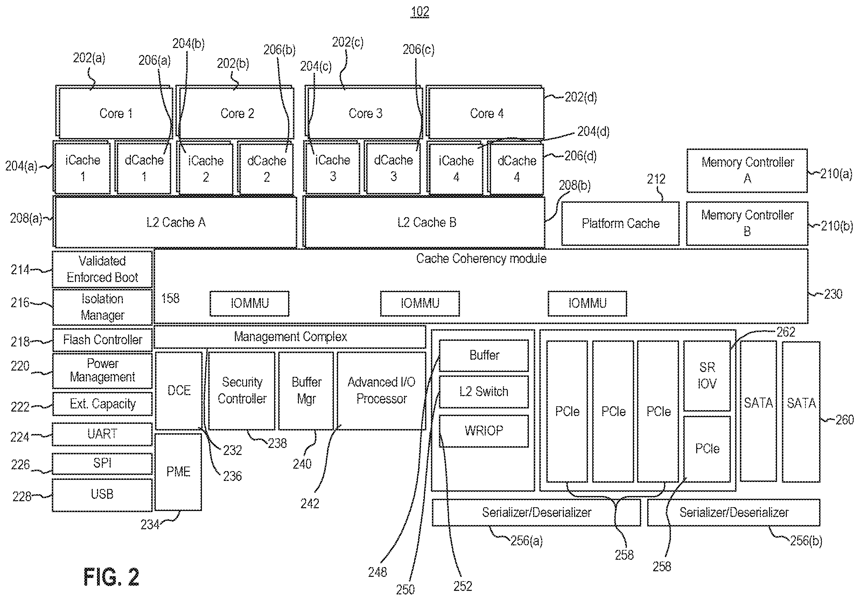

The motherboard may include a processor 102. In some embodiments, processor 102 may include any suitable processing device and/or a commercially available processor. In other embodiments, processor 102 may be a plurality of devices coupled together and configured to perform functions consistent with the present disclosure. For example, processor 102 may include a plurality of co-processors or graphical processing units, and each may be configured to run specific operations, such as floating-point arithmetic, graphics, signal processing, string processing, cryptography, or I/O interfacing. Processor 102 is further described in connection with FIG. 2.

The motherboard may also include a co-processor 104. Co-processor 104 may supplement the functions of processor 102. In some embodiments, co-processor 104 may perform operations of floating-point arithmetic, graphics, signal processing, string processing, cryptography, or I/O interfacing with peripheral devices. Co-processor 104 may offload processor-intensive tasks from processor 102, which may accelerate system 100 performance. In some embodiments, co-processor 104 may have customized operations. For example, co-processor 104 may run customized operations to initialize the SRE and/or enforce firewalls between isolated domains.

The motherboard may also include a clock generator 106 and a DRAM (dynamic random-access memory) 108. In some embodiments, clock generator 106 may include an electronic oscillator configured to produce a timing signal. Clock generator 106 may produce a symmetrical wave and/or more complex arrangements. Clock generator 106 may also include a resonant circuit and an amplifier. In some embodiments, clock generator 106 may include one or more frequency dividers, clock multiplier sections, and programmable clocks. Clock generator 106 may be configured during a BIOS boot time to the selected value.

DRAM 108 may include a solid-state memory used for processor 102 operations. Persons of ordinary skill in the art would appreciate that DRAM 108 may include multiple types of memories and may not be limited to random-access memory. In some embodiments, for example, DRAM 108 may include read-only memory.

The motherboard may also include BIOS 110. BIOS 110 may include non-volatile firmware used to perform hardware initialization during the booting process (power-on startup), and to provide runtime services for operating systems and programs. In some embodiments, BIOS 110 may include instructions to create an SRE and the isolated hardware domains. BIOS 110 may also include cryptographic keying for security handoffs when launching the protected SRE.

In some embodiments, BIOS 110 firmware may be pre-installed on a computer by an OEM (original equipment manufacturer) and may be configured to be the first software to run when the computer is powered on. In some embodiments, BIOS 110 may initialize and test the system hardware components. BIOS 110 may also load a boot loader from a mass memory device, which may then initialize a hypervisor with the virtualization layer that creates the isolated domains. Further, BIOS 110 may include cryptographical keys or instructions to connect virtual machines hosted in the SRE with isolated hardware resources in processor 102.

The motherboard may also include a power reset 164, which may be configured to re-initialize components of the motherboard and/or end current operations in system 100. In some embodiments, power reset 164 may initialize components, and BIOS 110 may restart system 100 and deploy the virtualization layer and/or the SRE.

The motherboard may also include one or more bridge components to communicate with the peripherals. In some embodiments, the motherboard may include a USB (Universal Serial Bus) bridge 114, a PCI (Peripheral Component Interconnect) bus bridge 112, a SCSI (Small Computer System Interface) bus bridge 113, and an EISA (Extended Industry Standard Architecture) bus bridge 122.

The motherboard may include video RAM 126 and video processor 124. Video RAM 126 may include a buffer between processor 102 and a display. In some embodiments, video RAM 126 may be implemented with a frame buffer so when images are to be sent to the display, they may be first read by the processor 102 as data from a form of main (non-video) RAM and then written to video RAM 126 in preparation for display. Video processor 124 may be implemented with an expansion card which may generate a feed of output images to a display device. In some embodiments, video processor 124 may include dedicated graphics cards and/or graphics processing unit (GPU).

In addition, the motherboard may include a network bus 120. Network bus 120 may provide connectivity to any type of network configured to provide communications between the motherboard, system 100, and other components that may communicate or be coupled with the motherboard. In some embodiments, network bus 120 may be a port for connection with any type of network that may provide communications, exchange information, and/or facilitate the exchange of information, such as the Internet, a Local Area Network, near field communication (NFC), optical code scanner, or other suitable connection(s) that facilitates the sending and receiving of information in system 100.

As shown in FIG. 1, the peripherals may include a monitor 150, a keyboard 152, and a mouse 153. The peripherals may also include a hard drive 154, external storage 160, a modem 158, and PCI slots 162. Embodiments of the present disclosure also contemplate that system 100 may include any other suitable peripheral devices.

Persons of ordinary skill in the art would appreciate that the configuration and boundaries of the functional building blocks of system 100 have been illustrated herein for the convenience of the description. Embodiments of the present disclosure contemplate that alternative boundaries may be implemented so long as the specified functions and relationships thereof are appropriately performed. Alternatives (including equivalents, extensions, variations, deviations, etc., of those described herein) will be apparent to persons of ordinary skill in the art based on the teachings contained herein. Such alternatives fall within the scope and spirit of the disclosed embodiments.

FIG. 2 shows a block diagram of an exemplary processor 102, consistent with disclosed embodiments. Processor 102 may include one or more cores 202, one or more icaches 204, one or more dcaches 206, and one or more L2 caches 208. Further, processor 102 may include one or more memory controllers 210 and a platform cache 212.

Cores 202 may be configured to perform parallel tasks to enhance efficiency of processor 102. In some embodiments, cores 202 may be physically distinct cores. In other embodiments, cores 202 may be defined virtually with multithreading or hyper-threading that may split processing units into virtual cores.

As shown in FIG. 2, a first level of cache memory may be divided in processor 102 having icache 204 and dcache 206. icache 204 may include instruction cache that may contain pre-code to demarcate individual instructions for cores 202. In some embodiments, icache 204 may include instructions to improve decode speed. dcache 206 may be a data cache. With this split between icache 204 and dcache 206, two small caches may exist, one exclusively caching instruction code and the other exclusively caching data. Software may separate code from data (global and static variables, constants, etc.). This arrangement may create a spatial separation between the actual instruction code, the hard-coded data, and dynamically allocated data, to facilitate data processing.

L2 cache 208 may include level 2 cache with an increased capacity than icache 204 or dcache 206. L2 cache 208 may serve as a bridge for the process and memory performance gap and may provide stored information to processor 102 without any interruptions or wait-states. L2 cache 208 may also be configured to reduce the access time of data. For example, L2 cache 208 may reduce the access time of data in events wherein the data may have already accessed before, so that the data may not need to be loaded again. In some embodiments, L2 cache 208 may perform buffering operations and may request data from the memory, serving as a closer waiting area compared to RAM.

Memory controllers 210 may include digital circuits that may manage the flow of data going to and from processor's 102 memories to processing units, such as cores 202. In some embodiments, processor 102 may be configured to have a unique cache, or group of caches, associated with each one of cores 202. Additionally, and/or alternatively, hardware components may be shared between different cores. In order to prevent leakage attacks, a virtualization layer may configure memory controllers 210 to isolate and segregate memory sections for only one, or a selected group, of cores 202. Memory controllers 210 may be implemented as integrated memory controller (IMC) and/or a memory chip controller (MCC).

In some embodiments, processor 102 may include platform/L3 cache 212 to provide a higher level of cache that may facilitate distribution of information between the different cores 202. In some embodiments, platform/L3 cache 212 may provide a higher-level cache that may store descriptors, keys, contexts, and other data needed for network packet processing. Such configurations may allow processor 102 to keep data-plane traffic out of external memories or peripherals. The virtualization layer of the SRE implemented from BIOS 110 may divide registers of platform/L3 cache 212 in specific isolated domains to mitigate vulnerability to certain attacks.

Processor 102 may also include one or more modules that may manage or control operations in processor 102. In some embodiments, processor 102 may include a validated enforced boot 214, an isolation manager 216, a flash controller 218, and a power management 220.

Validated enforced boot 214 may be a module that forces a boot using only software that is trusted by the OEM. When the PC starts, validated enforced boot 214 firmware may check the signature of each piece of boot software, including, for example, BIOS firmware drivers (such as Option ROMs), EFI (Extensible Firmware Interface) applications, and the operating system. If the signatures are valid, processor 102 may boot, and the firmware may provide control to the operating system. If the signatures are invalid, the processor 102 may generate an alert. Isolation manager 216 may be configured to bind software application, tenants, and/or enclaves with specific hardware components isolated from each other. In some embodiments, isolation manager 216 may configure a multi-socket system creating a virtual trusted platform module (TPM) that may bind processor 102 resources to individual sockets and bridge chips. Because isolation manager 216 may pin hardware resources for specific applications or tenants, a virtualization layer configured to operate processor 102 may implement a hypervisor without a scheduler.

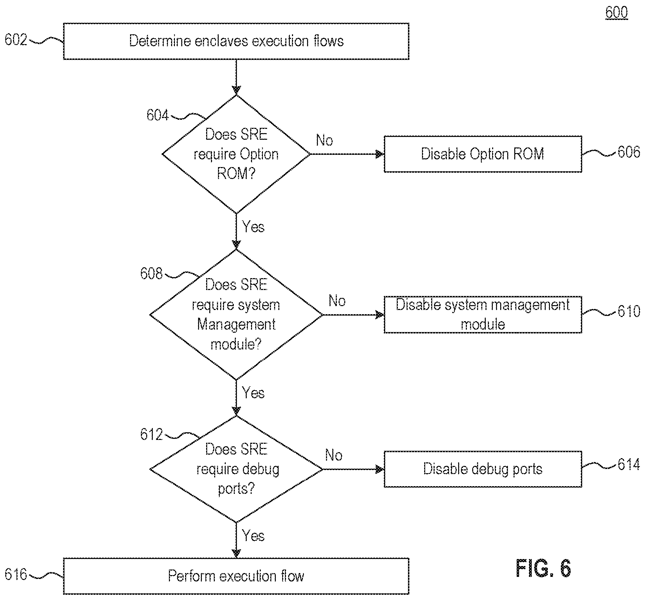

Flash controller 218 may be used to interface and operate a flash card. In some embodiments, flash controller 218 may operate in low duty-cycle environments, such as, for example, SD cards, CompactFlash cards, or other similar media. Power management 220 may be configured to control one or more components of processor 102 to enforce power management policies and/or disable certain elements. In some embodiments, power management 220 may perform demand-based switching (DBS) to minimize power consumption, activate turbo modes to enhance performance, and/or execute power mode managerial tasks. Moreover, and as further discussed in connection to FIG. 6, power management 220 may disable certain elements of processor 102 as required by security levels of potential security concerns.

In some embodiments, processor 102 may include additional modules, such as external capacity module 222, UART (Universal Asynchronous Receiver Transmitter) module 224, SPI (Serial Peripheral Interface) module 226, and USB module 228.

Processor 102 may also include a cache coherency module 230 including one or more input-output memory management units (IOMMU). Cache coherency module 230 may configure cache memories in processor 102 to have shared resources. When clients in a system maintain caches of a common memory resource, problems may arise with incoherent data, particularly in a multiprocessing system. Cache coherence module 230 may manage such conflicts by maintaining a coherent view of the data values in multiple caches. The IOMMU in cache coherency module 230 may connect a direct-memory-access I/O bus to the main memory. IOMMU may translate CPU-visible virtual addresses to physical addresses and may map device-visible virtual addresses (also called device addresses or I/O addresses in this context) to physical addresses. Further, IOMMU may protect cache memories in processor 102 from faulty or malicious devices. In some embodiments, firmware stored in BIOS 110 (FIG. 1) may manipulate IOMMU to segregate resources and create isolated domains with dedicated hardware components from processor 102.

As shown in FIG. 2, processor 102 may also include a management complex including a module PME (Power Management Event) 234. In some embodiments, PME 234 may be configured to facilitate a BIOS setup utility and/or facilitate power for the network card when the system is shut down. BIOS 110 may be configured to run an SRE shutdown that may unpin resources from the isolated domains. Moreover, the management complex may include a DCE (Distributed Codec Engine) 232, a security controller 238, a buffer management 240, and an I/O processor 242.

Processor 102 may also include a buffer 248 configured to control data in cache coherency module 230, a L2 switch 250 configured to control exchanges between, for example, L2 Cache 208 and dcache 206, and an acceleration module 252. Processor 102 may include a serializer/deserializer 256, one or more PCI cards 258, and one or more SATA (Serial Advanced Technology Attachment) modules 260. Further, processor 102 may include a module for SR-IOV (Single Root I/O Virtualization) 262.

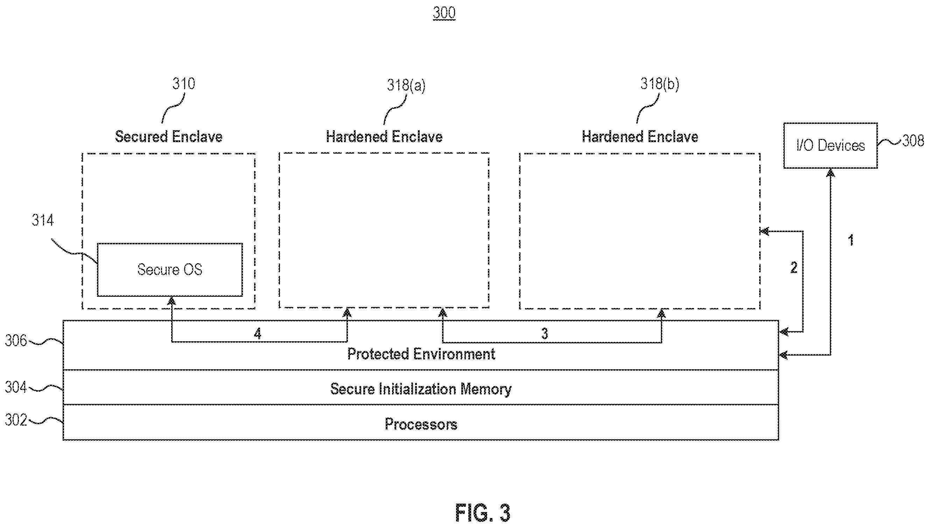

FIG. 3 shows a block diagram of an exemplary enterprise security environment 300, consistent with disclosed embodiments. Enterprise security environment 300 may include one or more processors 302, one or more secure initialization memories 304, and a protected environment 306. In some embodiments, secure initialization memories 304 may include one or more BIOS memories that may store a customized boot (e.g., customized booting instructions) to launch an SRE. Additionally, and/or alternatively, secure initialization memories 304 may be memory sectors that are pre-configured to have processors 302 execute instructions before starting general operating systems or multilevel security systems. For example, in addition to BIOS memories, secure initialization memories 304 may include ROM memories, RAM memories, or cache memories with instructions for initialization before activating OSs.

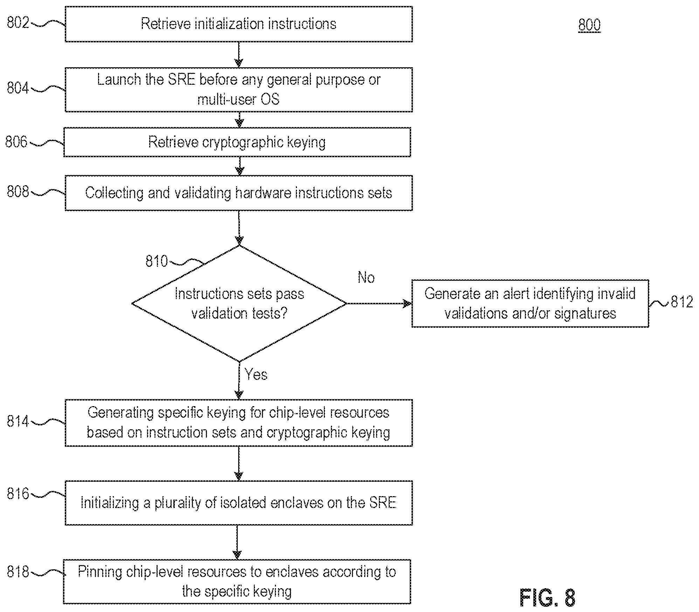

As further discussed in connection with FIG. 8, secure initialization memories 304 may include and/or store initialization instructions for launching an SRE as the first task, or close to the first task, that processor 102 perform at start up. For example, secure initialization memory 304 may include instructions to launch an SRE before any OS (including general purpose OS, multi-user OS, and/or multi-level security (MLS) system) gets executed. Moreover, secure initialization memories 304 may further include cryptographic keying for security handoffs and/or cryptographic information for establishing communication links with chip-level resources of processors 302.

As shown in FIG. 3, the aforementioned layers may support a secured enclave 310 and one or more hardened enclaves 318 and may communicate with I/O devices 308. Moreover, in some embodiments, secured enclave 310 may include a secure OS 314. In some embodiments, one or more of processors 102 (FIG. 2) may be implemented as processors 302 in enterprise security environment 300. Moreover, one or more of BIOS 110 (FIG. 1) may implement secure initialization memories 304 in enterprise security environment 300.

In enterprise security environment 300, booting processors 302 may execute a virtualization initialization or a validated enforced boot, which allows for initializing and executing SRE virtualization early. Secure initialization memories 304 may include cryptographic information to verify cryptographic integrity of device drivers, option ROMS, and SRE virtualization. Secure initialization memories 304 may use key derivation functions, which uses unique hardware identification, which allow for the SRE virtualization to validate root of trust during execution. Secure initialization memories 304 may be programmed with a customized boot that may pin resources in processors 302 to certain virtualized environments. In some embodiments, secure initialization memories 304 may pin portions of cache memory, cores, and/or IOMMUs, in processors 302 to specific secured domains. Moreover, secure initialization memories 304 may provide cryptographic keying for a security handoff and can delay executing of specific phases until SRE virtualization execution, therefore virtualizing phases of secure initialization memories 304 into secured enclave 310 containers. This provides the benefit of lowering the total code base (TCB exposure) of secure initialization memories 304 where delayed execution can happen securely in a secured enclave 310.

A validated initialization from secure initialization memories 304 may launch protected environment 306, which may allow users to isolate processors 302 resources for enclaves, such as secured enclave 310 and/or hardened enclaves 318. In some embodiments, protected environment 306 may create isolated domains that may protect processors 302 from cross-domain attacks. Protected environment 306 may protect processors 302 from leakage, modification, and privilege escalation attacks.

Protected environment 306 may create the isolated domains with specific processors 302 resources by binding user applications to virtualized guests using the PCH (Platform Controller Hub) and each processor's unique identification. Protected environment 306 may establish a multi-socket system that allocates resources from processors 302 to corresponding enclaves, virtual machines, kernels, and/or user applications. In addition, protected environment 306 may create and operate the isolated domains by manipulating interfacing elements that control data flow between enclaves and processors 302 resources. In some embodiments, protected environment 306 may manipulate addresses and/or registers of bridging chips or PCIe cards to isolate processors 302 resources. Furthermore, protected environment 306 may create the isolated domains by establishing chip-level cryptographic links that employ processors 302 entropy to define cryptographic functions. For instance, protected environment 306 may create isolated domains by assigning hardware resource IDs to specific enclaves and cryptographically securing the connections.

Moreover, to protect and create isolated domains, protected environment 306 may enforce on-chip firewall policies. In some embodiments, protected environment 306 may directly map a PCIe device cryptographically to a specific virtual machine guest or an application tenant. Protected environment 306 may implement rules or policies that may restrict access to certain resources based on the rules setup by the firewall. Further, protected environment 306 may implement a type 0 or type 1 hypervisor that has a built-in security policy to restrict access to processors 302 resources, protecting the individual, core, and memory resources of processors 302. In some embodiments, protected environment 306 may implement firewall policies based on header processing and/or payload processing. Protected environment 306 may involve layered protocol wrappers or content addressable memory filters to associate processing requests from specific enclaves and determine whether they have access to specific resources or route them to a specific domain. Further, protected environment 306 may perform regular expression matching or implement a payload scanner to determine the access or route of the processing requests.

Protected environment 306 may include a flow buffering configured to control data flow between enclaves and processors 302 resources. In some embodiments, protected environment 306 may identify process requests and may use a queue manager based on enclave information. If a process requires use of SRAM, protected environment 306 may apply firewall and may consult a state table to determine, which (if any) SRAM registers or blocks can be accessed by the requesting enclave. Further, protected environment 306 may implement counters to track the number of requests and identify suspicious behavior.

In some embodiments, protected environment 306 may operate without a scheduler. Protected environment 306 may pin processors 302 resources to specific and/or unique applications or independent enclaves. Once a workflow is pinned to processors 302 resources, the workflow may stay with the resource to avoid generating side effects that may reveal data to attackers. By preventing sharing of resources, protected environment 306 may minimize exposure from cross-domain attacks. In some embodiments, protected environment 306 may be inserted into a scheduling queue for services. Further, protected environment 306 may include a combination of features, including having some resources of processors 302 being isolated and without access from other enclaves, and some other resources having some sharing ability depending on firewall policies.

Moreover, and as further described in connection with FIG. 6, protected environment 306 may determine a security level for different workflows or enclaves and may disable or enable features of processors 302 according to the level of security or required execution flow. In some embodiments, protected environment 306 may disable or isolate the Option ROM, the System Management Mode, and the debug ports to reduce vulnerabilities that arise from sharing resources or typical execution flows.

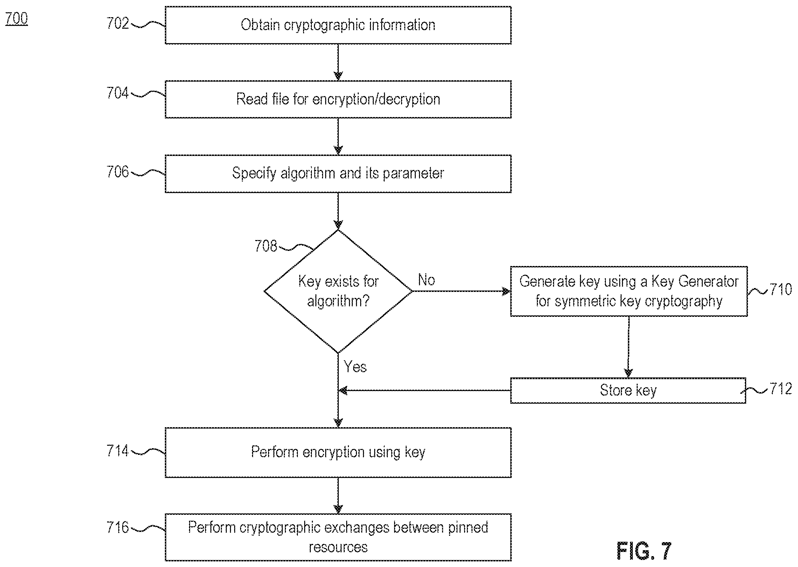

In addition, and as further described in connection with FIG. 7, protected environment 306 may also perform cryptographic methods to, for example, pass unique cryptographic information to each individual virtual machine or enclave. In some embodiments, pinning hardware resources from processors 302 to virtual machines may include a cryptographical link between processors 302 and each one of the tenants or guests in enterprise security environment 300. Moreover, protected environment 306 may create cryptographic links between processor interfacing resources and tenants, such as virtual machines. In some embodiments, protected environment 306 may achieve the secure connection by directly mapping a PCI express device cryptographically to a particular Virtual Machine (VM) guest.

Secure initialization memories 304 may also perform cryptographical tasks when setting up enterprise security environment 300. In some embodiments, and as further described in connection with FIG. 7, during the initialization or boot process, secure initialization memories 304 may pass cryptographic information, such as keys or key generators, to resources of processors 302 or storage elements that would interact directly with virtual machines or enclaves.

Processors 302, secure initialization memories 304, and protected environment 306 may service hardened enclaves 318 and secured enclaves 310. Hardened enclaves 318 may include virtual machines using proprietary or open-source operating systems. In some embodiments, hardened enclaves 318 may use Linux operating systems such as RedHat RHEL^{®}, Canonical Ubuntu^{®} and/or Windows^{®} operating systems. Further, hardened enclaves 318 may operate software platform for cloud computing, including interrelated components, which may control diverse, multi-vendor hardware pools of processing, storage, and networking resources throughout data centers. Moreover, hardened enclaves 318 may run unified threat management (UTM), intrusion detection systems (IDS) and intrusion prevention systems (IPS), such as, for example, SNORT^{®} and/or SURICATA^{®}.

Secured enclaves 310 may include a secure OS 314. In some embodiments, secure OS 314 may include a reduced OS that may be limited to necessary functions for specific tasks. To minimize the threat surface, secured enclaves 310 may operate with customized or isolated operating systems. In some embodiments, secured enclaves 310 may operate with a single-tenant physical server so that server resources may not be shared between customers. Further, secured enclave 310 may run workflows for the user with dedicated hardware entirely isolated for virtual machines or tenants. Additionally, and/or alternatively, secured enclave 310 may run a bare-metal OS configuration for the separation of tasks with custom OS implementations.

In some embodiments, enterprise security environment 300 may be implemented with a reduced number of lines of code to minimize exposed surface. For example, enterprise security environment 300 may be implemented with a minimalistic trusted code base which, in some embodiments may include no more than 1 million lines of code. When enterprise security environment 300 includes a secured enclave 310 with a secure OS 314 configured as a limited or bare metal OS, the instructions in secure initialization memories 304 may include a minimalistic trusted code base to launch protected environment 306, which in some embodiments may be 800,000 lines of code or less. Enterprise security environment 300 may minimize the trusted computing base (TCB) threat surface. By reducing the code exposed to attacks, enterprise security environment 300 may mitigate risks of attacks, such as speculative execution risk and zero-day attacks.

The arrangement of isolated hardware resources in enterprise security environment 300, where processors 302 resources may be pinned to specific domains, may enhance the processor security because it may mitigate hardware-related vulnerabilities. In some embodiments, enterprise security environment 300 may minimize physical, cyberspace, and supply chain vulnerabilities. By way of example, enterprise security environment 300 may mitigate attacks, such as: Storage removal from system; Probing of interface; Glitching power; Side Channel Analysis; Memory removal; Compromised firmware; Scan-based read-back attack; USB / peripheral trust subversion; Brute force crypto attack / replay attack; Known Common Vulnerability Enumeration; Authentication Abuse; Authentication Bypass; Excavation; Buffer Manipulation; Flooding; Integrity Attack; Pointer Attack; Excessive Allocation; Resource Leak Exposure; Parameter Injection; Content Spoofing; Resource Location Spoofing; Reversion Engineering; Functionality Misuse; Code Injection; Command Injection; Protocol Manipulation; Man in the middle (MITM) Attack / Interception; Modification During Manufacturing; Modification During Distribution; and/or Hardware Trojan Insertion.

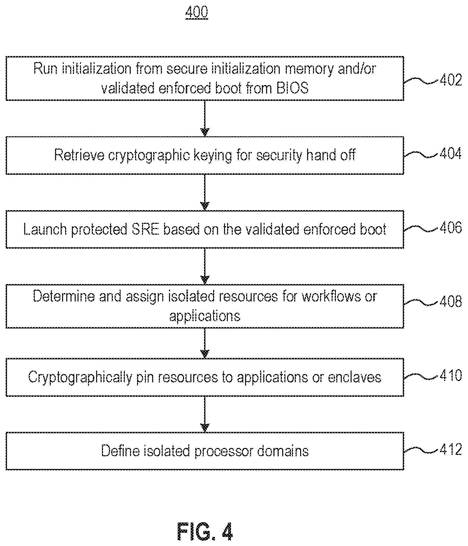

FIG. 4 illustrates a flow chart of an exemplary chip-level SRE configuration process 400, consistent with disclosed embodiments. Configuration process 400 may be carried out by processor 102 (FIG. 2). In some embodiments, other elements of system 100, such as BIOS 110 and/or co-processor 104 (FIG. 1), may execute configuration process 400. Additionally, and/or alternatively, configuration process 400, or some steps of the process, may be executed by multiple elements of system 100. For example, configuration process 400 may be executed by BIOS 110 in conjunction with processor 102 (FIG. 1).

Configuration process 400 may start at step 402, in which processor 102, or any element or combination of elements performing the process, may run startup operations from an initialization memory, such as secure initialization memories 304. In some embodiments, in which secure initialization memories 304 include a BIOS, at step 402 processor 102 may perform a validated enforced boot from a BIOS, such as BIOS 110. In some embodiments, step 402 may be mandatory, and any time processor 102 reboots, processor 102 performs step 402. The mandatory initialization from secure initialization memory 304 (or validated enforced boot) may check specific hardware devices according to pre-configured validations. In some embodiments, an OEM may load secure initialization memories 304, such as BIOS 110, with a pre-configured validated enforced initialization or boot that may attempt to initialize different elements of system 100 and/or resources in processor 102.

In some embodiments, at step 402, processor 102 may review and confirm certificates stored in a boot loader before launching the boot process. Processor 102 may correlate signatures during startup. If processor 102 or BIOS 110 identifies inconsistencies during the boot process, a firmware may prevent the boot and issue an alert. In some embodiments, using a unified extensible firmware interface, processor 102 or BIOS 110 may identify the boot process as not reliable and stop the booting process. The signature verification may prevent malware from hijacking the boot process and concealing itself from the operating system.

When the validated enforced initialization or boot is successful at step 402, configuration process 400 may continue to step 404. At step 404, configuration process 400 may retrieve cryptographic keying for a security handoff. In some embodiments, processor 102 may retrieve cryptographic keying from secure initialization memory 304 for future operations in the SRE. Alternatively, and/or additionally, processor 102 may retrieve the cryptographic keying from BIOS 110. The cryptographic keying may be used for cryptographical tasks and/or later creation of isolated domains, such as establishing links between chip-level resources and enclaves. Additionally, and/or alternatively, the cryptographic keying may provide a mechanism to guarantee reliability of different steps during configuration process 400. In some embodiments, the cryptographic keying may be provided by OEM BIOS devices. For instance, BIOS 110 may be an OEM BIOS that is pre-coded with instructions to initialize configuration process 400 and cryptographic keying for security hand-off with processor 102.

At step 406, processor 102 may launch a protected SRE based on the validated enforced boot of step 402 and the security handoff of step 404. In some embodiments, the validated enforced boot may launch a protected SRE at step 406 that may allow a user to isolate resources of processor 102 for different applications. The SRE may include a protected environment 306 (FIG. 3) in which chip-level resources may be isolated in different domains by pinning processor resources (e.g., cores, cache memory, and/or IOMMU), to specific application enclaves.

At step 408, processor 102 may determine and assign isolated resources for workflows or user applications. In some embodiments, processor 102 may determine portions of cache memory that would be assigned to one enclave. Based on instructions in BIOS 110, processor 102 may determine that L2 Cache 208(a) would be assigned to a first enclave, while L2 Cache 208(b) (FIG. 2) would be a second and distinct enclave. At step 408, processor 102 may determine that different cores would be assigned to specific enclaves, having, for instance, core 202(a) for the first enclave and core 202(b) for a second enclave.

Different assignment combinations may also be possible during the assignment and isolation of step 408. In some embodiments, icache 204, dcache 206, platform cache 212, memory controllers 210, and/or IOMMU in cache coherency module 230 may also be portioned in different combinations and permutations to isolate domains for virtual machines and/or SRE tenants. Additionally, and/or alternatively, once a resource is allocated for one workflow or enclave, it may not be allocated again. In such embodiments, elements may be isolated during step 408 and may not share any assignation to prevent cross-domain attacks. Additionally, and/or alternatively, based on validated enforced boot instructions, processor 102 may include some functional sharing between resources of processor 102. In some embodiments, for low security tasks, configuration process 400 may allow some shared resources between enclaves.

At step 410, processor 102 may cryptographically pin resources to applications on enclaves based on the assignments determined at step 410. In some embodiments, using keying retrieved during step 404, processor 102 may establish cryptographic links between resources of processor 102 and enclaves supported by the SRE. In some embodiments, the connection may be performed using the PCH and each processor unique ID to create a multi-socket system that may allocate resources for corresponding VM guests, kernel, and/or applications. Additionally, and/or alternatively, the connection may be performed by manipulating interfacing elements. In some embodiments, at step 410, processor 102 may manipulate the configuration of PCIe 258 to isolate processor resources and/or enforce firewall policies.

Moreover, and as further described in connection to FIG. 7, at step 410, processor 102 may apply cryptography techniques to protect communication sockets communicating with resources of processor 102 and enclaves of the SRE. Processor 102 may apply symmetric cryptography (such as, for example, Serpent, DES, RC4, IDEA, and/or BLOWFISH) or asymmetric cryptography (such as, for example, Diffie Hellman, EES, and/or XTR).

Once processor resources and communication links have been established and secured between processor resources and applications, such as guest virtual machines, processor 102 may continue to step 412. At step 412, processor 102 may define the isolated processor domains, which may include on-chip resources that are isolated and uniquely assigned to specific applications. Once a workflow is pinned to an isolated domain, the workflow may stay with the isolated domain to mitigate potential behavior analysis attacks and cross-domain attacks.

In some embodiments, configuration process 400 may result in an SRE virtualization that minimizes possibility of attacks because it may reduce the threat surface. By initializing the SRE virtualization and cache/memory pinning from a validated enforced boot early in a customized BIOS boot process at step 402, configuration process 400 may create a small but secure operating system that may allow secure division of processor resources. Moreover, the chip resource assignment and binding of steps 408-410 may result in a chip-level domain isolation that may pin virtual machines within a multi-socket system. Further, these steps may facilitate virtualization of cores pinning hardware resources cryptographical to each virtual guest machine.

Configuration process 400 may allow hosting of virtual machines using a hypervisor without a scheduler and with ring separation for security. Configuration process 400 may create an SRE that may mitigate hardware exploits because configuration process 400 may result in a hypervisor directly binding on-chip hardware resources with isolated applications, instead of creating a scheduler. Hosting and pinning of the virtualization host kernel within cache memory of the processor cores and passing of unique cryptographic information to each individual virtual machine guest during the boot process may improve the functioning of a computer by enhancing security features.

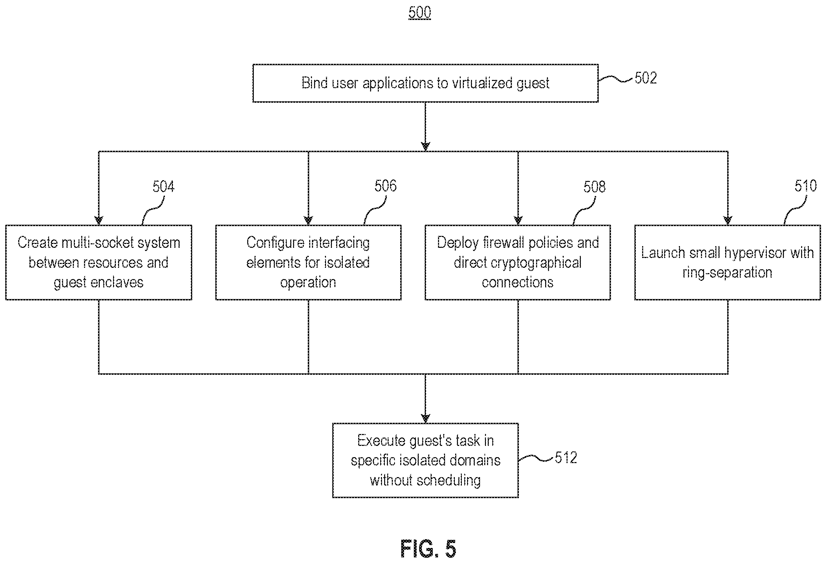

FIG. 5 illustrates a flow chart of an exemplary resource binding process 500, consistent with disclosed embodiments. Binding process 500 may be carried out by processor 102 (FIG. 2). In some embodiments, other elements of system 100, such as BIOS 110 and/or co-processor 104 (FIG. 1), may execute binding process 500. Binding process 500 may be part of configuration process 400. For example, binding process 500 may be executed during step 410 (FIG. 4).

Binding process 500 may start at step 502, in which processor 102 may have determined resources that may be allocated to virtualized guests and the distribution of the allocation. Binding process 500 may then continue to steps 504-510 to execute pin resources and bind isolated domains with applications. In some embodiments, as shown in FIG. 5, steps 504-510 may be conducted in parallel, having processor 102 executing multiple tasks concurrently. In other embodiments, processor 102 may only perform one of the tasks in steps 504-510 (e.g., processor 102 may only perform step 504). Embodiments of the present disclosure also contemplate that processor 102 may perform one or more steps 504-510 sequentially or in different orders.

At step 504, processor 102 may create a multi-socket system between resources and guest enclaves. In some embodiments, processor 102 may establish a multi-socket system for cache memories in processor 102 that may be coherent between and/or across sockets. The multi-socket system may segregate the cache memories based on their assigned enclave or application, and a compiler may automatically generate the socket selection as instructed in the validated initialization or enforced boot.

At step 506, processor 102 may configure interfacing elements for isolated operation. In some embodiments, processor 102 may configure PCIe 258 to specifically receive/transmit only processing requests associated with a unique enclave or unique ID of processor resources. Processor 102 may achieve this by updating relational tables in the interfacing elements of processor 102.

At step 508, processor 102 may deploy firewall policies and direct cryptographical connections. In some embodiments, processor 102 may create firewall policies for routing processing request from enclaves to specific isolated domains. Additionally, and/or alternatively, processor may establish cryptographical connections between specific resources of processor 102 and enclaves.

At step 510, processor may also establish a hypervisor with ring separation to bind resources with different enclaves. In the hypervisor, applications may run isolated from other resources of processor 102. The ring separation may create an environment in processor 102 that may prevent a rogue application to perform cross-domain attacks or spoof information between different enclaves. In some embodiments, the hypervisor created at step 510 may perform a particular task that may only be performed by specified resources in processor 102. This arrangement may create an equivalent of a trusted computing base (TCB) that may be smaller and have a smaller surface of exposure. Ensuring that the hypervisor is small may reduce potential attack vectors. Moreover, because applications may run in isolated domains that do not share resources, the hypervisor performance may not depend on the availability of resources.

At step 512, on-chip resources of processor 102 may be pinned or configured to work in isolation with specified workflows or enclaves. Processor 102 may execute workflows from SRE guests or tenants in the specific domains without any required scheduling. Because the resources have been carved out for the resource, the resources may be directly assigned to specific tasks and may not be shared between enclaves.

FIG. 6 illustrates a flow chart of an exemplary enclave feature disabling process 600, consistent with disclosed embodiments. Disabling process 600 may be carried out by processor 102 (FIG. 2). Additionally, and/or alternatively, other elements of system 100, such as BIOS 110 and/or co-processor 104 (FIG. 1), may execute disabling process 600. Disabling process 600 may be part of configuration process 400. In some embodiments, disabling process 600 may be executed during step 412 (FIG. 4).

At step 602, processor 102 may estimate enclave execution flows. Based on information in BIOS 110 and/or user inputted instructions, processor 102 may determine potential execution flows and a security level for the different enclaves. Based on the estimated execution flows and the required level of security, processor 102 may elect to disable certain features to enhance security or improve performance. In some embodiments, an execution workflow in processor 102 may include instructions to process data or perform a computational task. Embodiments of the present disclosure contemplate that execution flows may include operations of storing a sequence of instructions; locating memory address where the first instruction and copying to the program counter; addressing a program counter to memory via the address bus; responding to a memory by sending a copy of the state of the bits at that memory location on the data bus; automatically incrementing a pointer to contain the address of the next instruction in memory; and executing an instruction in the instruction register. Persons of ordinary skill in the art would appreciate that any other suitable operations during execution workflows may be possible. Based on the estimated execution workflows and security level, disabling process 600 may disable or isolate certain elements of processor 102 to reduce vulnerabilities that may arise from sharing resources in typical execution flows.

At step 604, processor 102 may determine whether the requested or estimated workflow(s) require an option ROM. If processor 102 determines that a workflow does not require option ROM (step 604: No), processor 102 may continue to step 606 and disable Option ROM features in processor 102. In some embodiments, processor 102 may instruct power management 220 (FIG. 2) to disable option ROM associated modules. If, however, processor 102 determines that a workflow does require option ROM (step 604: yes), processor 102 may leave Option ROM working and continue to step 608.

At step 608, processor 102 may determine whether the requested or estimated workflow(s) require system management modules, such as elements in management complex in FIG. 2. If processor 102 determines that a workflow does not require system management modules (step 608: No), processor 102 may continue to step 610 and disable modules in the management complex. In some embodiments, processor 102 may disable security controller 238, buffer management 240, and/or PME 234. However, if processor 102 determines that a workflow does require system management modules (step 608: yes), processor 102 may leave active system management modules and continue to step 612.

At step 612, processor 102 may determine whether the estimated or requested workflow(s) or virtual machines supported by the SRE require debug ports. If processor 102 determines that a workflow or a virtual machine does not require debug ports (step 612: No), processor 102 may continue to step 610 and disable debug ports. However, if processor 102 determines that a workflow or a virtual machine does require debug ports (step 612: yes), processor 102 may leave debug ports active and continue to step 616, where processor 102 may perform the workflows with the enabled/disabled elements.

Disabling process 600 may further improve security of processor 102 because it may minimize sharing of resources and may prevent leakage at the lower layers of the implementation stack caused by shared hardware resources and microarchitectural attacks.

FIG. 7 illustrates a flow chart of an exemplary cryptographical pinning process 700, consistent with disclosed embodiments. Cryptographical pinning process 700 may be carried out by processor 102 (FIG. 2). Additionally, and/or alternatively, other elements of system 100, such as BIOS 110 and/or co-processor 104 (FIG. 1), may execute cryptographical pinning process 700. Cryptographical pinning process 700 may be part of configuration process 400. Processor 102 may perform cryptographical pinning process 700 to pass unique cryptographic information to each individual virtual machine guest during the boot process (e.g., in step 402) and/or for cryptographically pinning hardware resources (e.g., cores, cache, memory, and IOMMU) to each virtual guest machine (e.g., in step 410).

At step 702, processor 102 may obtain cryptographic information. In some embodiments, in configuring the SRE, processor 102 may obtain information directly form BIOS 110, secure initialization memories 304, and/or from one of the enclaves. At step 704, processor 102 may read a pinning file for encryption or decryption. In some embodiments, for a specific resource and enclave connection, processor 102 may read the required protocol and security level. At step 706, processor 102 may identify an algorithm and its key parameters.

At step 708, processor 708 may determine if a key is available for an algorithm. If the key is not present (step 708: No), processor 102 may continue to step 710 and use a Key Generator to generate the key for performing a cipher operation specified in the file of step 704. Key Generator may be part of the validated enforced boot and may be provided with symmetric ciphers. At step 712, the key may be stored in a specific path and for the specific enclave/resource pair. In some embodiments, the generated key may be stored in a cache memory that may be reserved for certain workflows or specific virtual machines. However, if the key is already present in step 708 (step 708: yes), and the specified path is valid, that key may be used for cryptographically pinning the resource.

Using the key, the resources may be cryptographically pinned at step 714. Processor 102 may perform the encryption. In some embodiments, at step 714, processor 102 may set a timer for the encryption to prevent misuse of processor resources by leaving resources idle for too long.

At step 716, processor 102 may perform exchanges between resources in isolated domains with their assigned enclaves using the cryptographic channels.

Cryptographical pinning process 700 is an exemplary process for establishing secured communications between chip-level resources and tenants of the SRE, such as virtual machines. Embodiments of the present disclosure also contemplate applying other cryptography methods to the SRE to secure communications. In some embodiments, processor 102 may implement public key-based methods by preprograming BIOS 110 and may use encoded plain text during the transmission of instructions. Additionally, and/or alternatively, processor 102 may employ a private key-based method for encoding/decoding ciphered instructions. In some embodiments, processor 102 may combine different strategies for pinning hardware resources cryptographically to each virtual guest machine. Depending on the level of security and ciphering strategies, processor 102 may apply faster or slower techniques. Additionally, and/or alternatively, certain elements of system 100 may be configured to specifically perform the cryptographical tasks. For example, co-processor 104 may be configured to perform any cryptographical tasks during configuration process 400 (FIG. 4).

FIG. 8 illustrates a flow chart of an exemplary virtualization process 800, consistent with disclosed embodiments. Virtualization process 800 may be carried out by processors 302 (FIG. 3). Additionally, and/or alternatively, elements of system 100 (FIG. 1), such as processor 102, BIOS 110, and/or co-processor 104 (FIG. 1), may execute virtualization process 800. Virtualization process 800 may be performed early during processor startup. For example, in some embodiments virtualization process 800 may be performed during boot operations. Alternatively, and/or additionally, virtualization process 800 may be performed before any OS is initiated or activated to create low level virtualization.

At step 802, processors 302 may retrieve initialization instructions, early during startup, from a dedicated memory. For example, processors 302 may be configured to retrieve initialization instructions form secure initialization memory 304 and/or a BIOS memory, such as BIOS 110. The initialization instructions may include routines and/or protocols to initialize an SRE, such as protected environment 306. As further described in connection with FIG. 4, the initialization instructions may also include booting instructions and validation routines.

At step 804, processors 302 may launch an SRE, before loading any general purpose or multi-user OS. For example, before initialization of OSs, processors 302 may launch an SRE in step 804. As previously discussed in connection with FIG. 3, the SRE may host virtual machines using a hypervisor without a scheduler. In some embodiments, the SRE of step 804 may provide a virtualization layer that isolates hardware and/or chip-level resources.

At step 806, processors 302 may retrieve cryptographic keying from a dedicated memory. For example, processors 302 may obtain cryptographic keying from secure initialization memory 304. In some embodiments, depending on the launch of step 804 only a portion of the cryptographic keying may be retrieved in step 804. For example, based on the scope of the SRE, processors 302 may select to retrieve only a portion of the cryptographic keying. In some embodiments, the cryptographic keying may be stored in secure initialization memory 304 and may include a key management system labeling the different type of keys that could be required during SRE operations.

At step 808, processors 302 may collect and validate hardware instruction sets and/or processor drivers. For example, processors 302 may collect CPU instructions sets in step 808 to prepare for SRE-based hardware isolation. The instruction sets may include code that specify chip-level instructions, resource tables, and/or tasks that control of communications of chip-level resources. For example, instruction sets collected in step 808 may specify registers, protocols, and packet structures for communication between different chip-level resources. Further, in some embodiments processors 302 may validate the hardware instructions to evaluate their safety and security. For example, the initialization instructions of step 802 and/or the cryptographic keying of step 806 may include information for validating instruction sets.

In step 810, processors 302 may determine whether the instruction sets pass validation tests. For example, processors 302 may perform verification tasks and determine that instruction sets comply with verification requirements and validation tests. If processors 302 determine that the instruction sets collected in step 808 do not pass the cryptographic tests (step 810: No), processors 302 may generate an alert identifying invalid signatures or validations in step 812. However, if in step 810 processors 302 determines instructions steps pass the cryptographic tests (step 810: Yes), virtualization process 800 may continue to step 814.

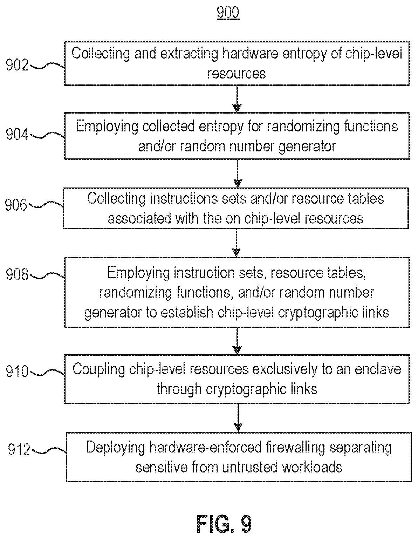

At step 814, processors 302 may generate specific keying for chip-level resources using the instruction sets and cryptographic keying. For example, through the SRE, processors 302 may apply the cryptographic keying to the instructions sets and generate specific keying for the chip-level resources of processors 302. As further described in connection with FIG. 9, the SRE may use hardware entropy to generate hardware specific keys that can be used to link and/or communicate chip-level resources with work flows or enclaves.

At step 816, processors 302 may initialize a plurality of isolated enclaves on the SRE. For example, processors 302 may initialize the hardened enclaves 318 and secure enclave 310 (FIG. 3). In some embodiments, the enclaves may be initiated by allocating workflows or creating VMs for later assignation of hardware resources.

At step 818, processors 302 may pin chip-level resources to enclaves according to specific keying. As further discussed in connection with FIG. 9, processors 302 may establish cryptographic links communicating chip-level resources with the plurality of enclaves. In some embodiments, resources may be pinned to unique enclaves exclusively to minimize potential of cross-domain attacks. In other embodiments, certain resources may be shared between different enclaves and place firewall protections to prevent leakage or privilege escalation.

FIG. 9 illustrates a flow chart of an exemplary chip-level resource pinning process 900, consistent with disclosed embodiments. Pinning process 900 may be carried out by processors 302 (FIG. 3). Additionally, and/or alternatively, elements of system 100 (FIG. 1), such as processor 102, BIOS 110, and/or co-processor 104 (FIG. 1), may execute pinning process 900. Pinning process 900 may be performed as part of configuration process 400 and/or virtualization process 800.

At step 902, processors 302 may collect and extract hardware entropy of chip-level and/or processor hardware resources. For example, processors 302 may collect and accumulate variances in the execution time of a given set of instructions by processors 302 resources. Processors 302 may accumulate the variances using, for example, a linear-feedback shift register (LFSR) with an irreducible primitive polynomial. The measurement of the execution time jitter may be performed over the logic of the LFSR and execution times may be used to generate an entropy pool.

At step 904, processors 302 may implement a random number generator using the collected entropy. For example, processors 302 may perform operations of invoking memory accesses to induce timing variations, fetching a time stamp to calculate a delta to the time stamp of the previous loop iteration, injecting the time delta value into the entropy pool using an LFSR that operates bitwise on the time delta operation, and iterating the sequence to generate an entropy pool that allows generating a randomizing function and/or a random number generator.

At step 906, processors 302 may collect instruction sets and/or resource tables associated with the on-chip level resources. For example, processors 302 may query instruction sets and/or hardware IDs from hardware resources of processors 302. At step 908, processors 302 may employ instructions sets, resource tables, randomizing functions, and/or random number generator, to establish chip-level cryptographic links. For example, as further described in connection with FIG. 5, processors 302 may create connections through a multi-socket system between resources and enclaves and create cryptographic links or connections using the randomizing functions of step 904 to encrypt communications.

At step 910, processors 302 may couple chip-level resources exclusively to an enclave through the cryptographic links. Further, at step 912 (and as further described in connection with FIG. 4), processors 302 may deploy hardware-enforced firewalling that separate cryptographic links to isolate sensitive from untrusted workloads. For example, in some embodiments an SRE may include cross-domain protections. In such embodiments, processors 302 may deploy firewalls isolating VMs with policies rerouting requests from the plurality of enclaves to specific chip-level resources based on header or payload processing. In such embodiments, firewall policies may require processors 302 to employ a memory state table and determining SRAM registers or blocks that can be accessed by each of the plurality of enclaves. Thus, pinning process 900 may result in binding chip-level resources to exclusive enclaves using secure cryptographic links.

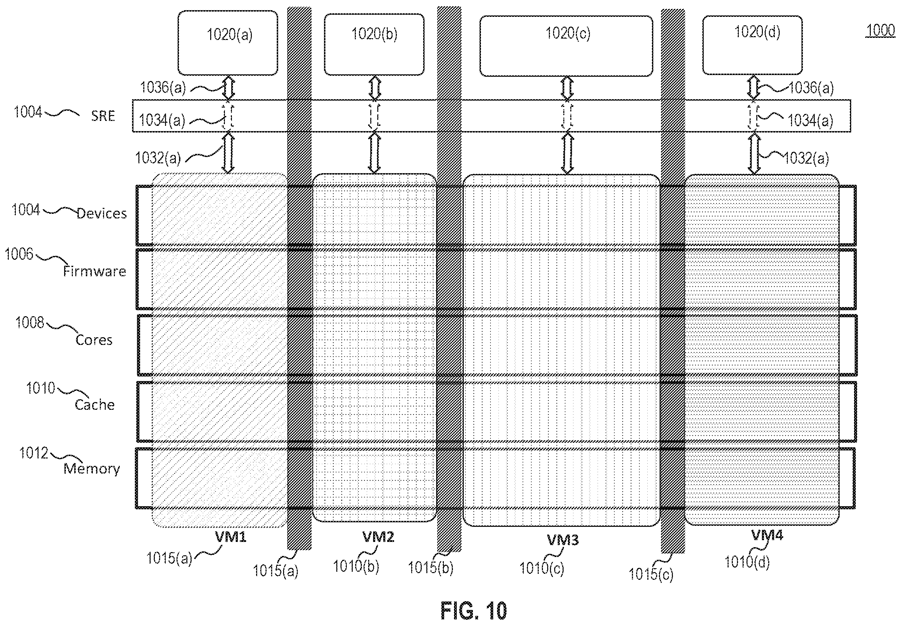

FIG. 10 illustrates a block diagram of an exemplary representation virtualized environment 1000 with isolated resources, consistent with disclosed embodiments. Virtualized environment 1000 may represent the virtual architecture of processor 102 or processors 302 after virtualization process 800 and pinning process 900. Additionally, or alternatively, virtualized environment 1000 may result from configuration process 400 and/or process 500.

Virtualized environment 1000 may include an SRE 1002. In some embodiments, SRE 1002 may include protected environment 306. Virtualized environment 1000 may also include devices 1004, firmware 1006, cores 1008, cache 1009, and memory 1012. Each of these devices 1004, firmware 1006, cores 1008, cache 1009, and memory 1012 may represent one or more devices of processor 102. For example, cache 1009 may represent icaches 204 and/or cores 1008 may represent cores 202 (FIG. 2).

As shown in FIG. 10, as a result of virtualization process 800, or configuration process 400, devices 1004, firmware 1006, cores 1008, cache 1009, and memory 1012 may be divided into isolated virtual machines 1010. Each of virtual machines 1010(a)-1010(d) may have assigned and/or pinned a portion of devices 1004, firmware 1006, cores 1008, cache 1009, and memory 1012. In addition, in some embodiments each one of the virtual machines 1010 may be separated by firewalls 1015. In some embodiments, as shown in FIG. 10, the allocation of processor resources may be tailored to target application. In other embodiments, the allocation of processor resources may be uniform. Further, as also explained in connection with FIG. 9, pinning resources may be complemented with hardware-enforce firewalling. In this way it is possible to have hardware enforced separation between different applications and workflows.

SRE 1002 may communicate with each one of the virtual machines 1010 using cryptographic links 1032. Each one of the cryptographic links 1032 may be exclusive for each one of the virtual machines 1010. Further, as shown in FIG. 10, SRE 1002 may support applications (or enclaves) 1020. In such embodiments, SRE 1002 may couple cryptographic links 1032 with corresponding applications 1020. For example, SRE 1002 may couple cryptographic links 1032, which communicate chip-level resources, with applications 1020 through conduits 1034 and connections 1036. As shown in FIG. 10, to keep isolation between different machines, each application 1020 may have a designated conduit 1034 (a)-(d) and a designated connection 1036 (a)-(d).

Virtualized environment 1000 provides a visual representation of how the configuration process 400, virtualization process 800, and pinning process 900 may create virtualization and isolation completely down the stack of hardware and software layers. Such a configuration may reduce the attack surface by increasing workload isolation. The partitioning of shared resources shown in virtualized environment 1000 may support availability, integrity, and confidentiality. Further, firewalls 1015 may help separate sensitive data from untrusted workloads and provide a more deterministic workload performance. Moreover, the arrangement of SRE 1002 may allow management of virtual machines 1010 that are protected against leakage, modification, and privilege escalation attacks. In addition, employing exclusive cryptographic links 1032 may result in greater data confidentiality and create a chain of trust that verifies and maintains system integrity at boot (e.g., from power on) though the launch of critical workloads.

Another aspect of the disclosure is directed to a non-transitory computer readable medium storing instructions that, when executed, may cause one or more processors to perform the methods, as discussed above. The computer-readable medium may include volatile or non-volatile, magnetic, semiconductor, tape, optical, removable, non-removable, or other types of computer-readable medium or computer readable storage devices. In some embodiments, the computer-readable medium may be the storage unit or the memory module having the computer instructions stored thereon, as disclosed. In some embodiments, the computer-readable medium may be a disc or a flash drive having the computer instructions stored thereon.

It will be apparent to those skilled in the art that various modifications and variations can be made to the disclosed system and related methods. Other embodiments will be apparent to those skilled in the art from consideration of the specification and practice of the disclosed system and related methods. It is intended that the specification and examples be considered as exemplary only, with a true scope being indicated by the claims and their equivalents.

Moreover, while illustrative embodiments have been described herein, the scope thereof includes any and all embodiments having equivalent elements, modifications, omissions, combinations (e.g., of aspects across various embodiments), adaptations and/or alterations as would be appreciated by those in the art based on the present disclosure. For example, the number and orientation of components shown in the exemplary systems may be modified. Further, with respect to the exemplary methods, the order and sequence of steps may be modified, and steps may be added or deleted. Further, the steps of the disclosed methods may be modified in any manner, including by reordering steps and/or inserting or deleting steps.

Thus, the foregoing description has been presented for purposes of illustration only. It is not exhaustive and is not limiting to the precise forms or embodiments disclosed. Modifications and adaptations will be apparent to those skilled in the art from consideration of the specification and practice of the disclosed embodiments.

Further features of the disclosure are set out in following clauses:
1. A system for secure processor virtualization comprising: a secure initialization memory comprising: initialization instructions for launching a security runtime environment before operating systems; and cryptographic keying for security handoffs; and one or more processors coupled to the secure initialization memory, wherein the one or more processors are configured to:
   retrieve the initialization instructions from the secure initialization memory at startup;
   execute the initialization instructions to launch the security runtime environment and retrieve at least a portion of the cryptographic keying from the secure initialization memory;
   generate specific keying for chip-level resources in the one or more processors by combining instruction sets of the chip-level resources and the cryptographic keying;
   initialize a plurality of isolated enclaves on the security runtime environment; and
   pin at least a portion of the chip-level resources to the plurality of enclaves according to the specific keying and by establishing exclusive cryptographic links between the chip-level resources and the plurality of enclaves.
2. The system of clause 1, wherein the secure initialization memory comprises one or more BIOS, and the initialization instructions comprise customized booting instructions for a validated boot.
3. The system of clause 2, wherein
   the customized booting instructions comprise cryptographic information to verify integrity of processor drivers or instruction sets; and
   the one or more processors are further configured to generate an alert when identifying invalid cryptographic signatures associated with the processor drivers or instruction sets.
4. The system of clause 1, wherein combining instruction sets of the chip-level resources and the cryptographic keying comprises:
   collecting entropy associated with the chip-level resources; and
   employing the collected entropy in randomization functions used for the cryptographic links.
5. The system of clause 1, wherein:
   the initialization instructions comprise a minimalist trusted code base;
   pinning chip-level resources comprises creating a multi-socket system allocating the chip-level resources to independent ones of the plurality of enclaves; and
   each socket in the multi-socket system is cryptographically protected.
6. The system of clause 1, wherein
   pinning chip-level resources comprises manipulating registers of bridging chips in the one or more processors to assign the chip-level resources to unique enclaves from the plurality of enclaves; and
   the chip-level resources comprise a plurality of CPU cores, cache memories, and IOMMUs.
7. The system of clause 1, wherein:
   the plurality of enclaves comprise hardened enclaves and secured enclaves;
   the hardened enclaves being loaded with operating system for cloud computing; and
   the secured enclaves being loaded with a limited operating system configured to perform functions by operating a single-tenant physical server.
8. The system of clause 1, wherein launching the security runtime environment comprises disabling Option ROM, System Management Modes, and debug ports of the one or more processors.
9. The system of clause 1, wherein
   the security runtime environment comprises cross-domain protections; and
   the one or more processors are further configured to deploy firewall policies rerouting requests from the plurality of enclaves to specific chip-level resources based on header or payload processing.
10. The system of clause 9, wherein firewall policies comprise a state table determining SRAM registers or blocks that can be accessed by each of the plurality of enclaves.
11. A computer-implemented method for processor virtualization, the method comprising
   retrieving, from a secure initialization memory, initialization instructions for launching a security runtime environment at startup before initializing operating systems;
   executing the initialization instructions to launch a security runtime environment and retrieve at least a portion of cryptographic keying for security handoffs from the secure initialization memory;
   generating specific keying for chip-level resources in one or more processors by combining instruction sets of the chip-level resources and the cryptographic keying;
   initializing a plurality of isolated enclaves on the security runtime environment; and
   pinning at least a portion of the chip-level resources to the plurality of enclaves according to the specific keying and by establishing exclusive cryptographic links between the chip-level resources and the plurality of enclaves.
12. The method of clause 11, wherein the secure initialization memory comprises one or more BIOS, and the initialization instructions comprise customized booting instructions for a validated boot.
13. The method of clause 12, wherein
   the customized booting instructions comprise cryptographic information to verify integrity of processor drivers; and
   the method further comprises generating an alert when identifying invalid cryptographic signatures associated with the processor drivers.
14. The method of clause 11, wherein combining instruction sets of the chip-level resources and the cryptographic keying comprises:
   collecting entropy associated with the chip-level resources; and
   employing the collected entropy in randomization functions used for the cryptographic links.
15. The method of clause 11, wherein:
   the initialization instructions comprise a minimalistic trusted code base;
   pinning chip-level resources comprises creating a multi-socket system allocating the chip-level resources to independent ones of the plurality of enclaves; and
   each socket in the multi-socket system is cryptographically protected.
16. The method of clause 11, wherein
   pinning chip-level resources comprises manipulating registers of bridging chips in the one or more processors to assign the chip-level resources to unique enclaves from the plurality of enclaves; and
   the chip-level resources comprise a plurality of CPU cores, cache memories, and IOMMUs.
17. The method of clause 11, wherein:
   the plurality of enclaves comprise hardened enclaves and secured enclaves;
   the hardened enclaves being loaded with an operating system for cloud computing; and
   the secured enclaves being loaded with a limited operating system configured to only perform necessary functions by operating a single-tenant physical server.
18. The method of clause 11, wherein launching the security runtime environment comprises disabling Option ROM, System Management Modes, and debug ports of the one or more processors.
19. The method of clause 11, wherein
   the security runtime environment comprises cross-domain protections;
   the method further comprises deploying firewall policies rerouting requests from the plurality of enclaves to specific chip-level resources based on header or payload processing; and
   the firewall policies comprise a state table determining SRAM registers or blocks that can be accessed by each of the plurality of enclaves.
20. A non-transitory computer-readable medium storing instructions that, when executed by one or more processors, configure the one or more processors to perform operations for processor virtualization, the operations comprising:
   retrieving initialization instructions for launching a security runtime environment at startup before initializing operating systems;
   executing the initialization instructions to launch the security runtime environment and retrieve at least a portion of cryptographic keying for security handoffs;
   generating specific keying for chip-level resources in one or more processors by combining instruction sets of the chip-level resources and the cryptographic keying;
   initializing a plurality of isolated enclaves on the security runtime environment; and
   pinning at least a portion the chip-level resources to the plurality of enclaves according to the specific keying and by establishing exclusive cryptographic links between the chip-level resources and the plurality of enclaves.

## Claims

1. A system for secure processor virtualization comprising:
a secure initialization memory comprising:
initialization instructions for launching a security runtime environment before operating systems; and
cryptographic keying for validated execution, the cryptographic keying comprising instructions for cryptographical tasks; and
one or more processors coupled to the secure initialization memory, wherein the one or more processors are configured to:
retrieve the initialization instructions from the secure initialization memory at startup;
execute the initialization instructions to launch the security runtime environment and retrieve at least a portion of the cryptographic keying from the secure initialization memory;
before loading an operating system, generate a plurality of specific keys for chip-level resources in the one or more processors by applying the cryptographic keying from the secure initialization memory to instruction sets of the chip- level resources, the specific keys being hardware specific keys for chip-level resources, the chip-level resources comprising CPU cores, cache memories, and input-output memory management units (IOMMUs); and
pin at least a portion of the CPU cores, cache memories, and IOMMUs to unique enclaves from a plurality of virtual enclaves on the security runtime environment.

2. The system of claim 1, wherein the secure initialization memory comprises one or more BIOS, and the initialization instructions comprise customized booting instructions for a validated boot.

3. The system of claim 2, wherein
the customized booting instructions comprise cryptographic information to verify integrity of processor drivers or instruction sets; and the one or more processors are further configured to generate an alert when
identifying invalid cryptographic signatures associated with the processor drivers or instruction sets.

4. The system of claim 1, wherein applying the cryptographic keying to instruction sets of the chip-level resources comprises:
collecting entropy associated with the chip-level resources within the one or more processors, the collected entropy comprising variances in execution time; and
employing the collected entropy in randomization functions used for the cryptographic links, the randomization functions comprising a random number generator; and
collecting the instructions sets and resource tables associated with the CPU cores, cache memories, and IOMMUs by querying instruction sets and the hardware IDs.

5. The system of claim 1, wherein:
the initialization instructions comprise a minimalist trusted code base with less than one million lines of code;
pinning chip-level resources comprises creating a multi-socket system allocating the chip-level resources to the unique enclaves; and
each socket in the multi-socket system is cryptographically protected.

6. The system of claim 1, wherein the processor is further configured to:
after pinning the CPU cores, cache memories, and IOMMUs in the portion to the unique enclaves, execute guest workflows in specific ones of the unique enclaves, the specific ones of the unique enclaves being directly assigned without scheduling.

7. The system of claim 6, wherein
executing the guest workflows in specific ones of the unique enclaves comprises:
determining whether the guest workflows require an option ROM; and
in response to determining the guest workflows do not require an option ROM, disable option ROM associated modules in the one or more processors.

8. The system of claim 1, wherein pinning the portion of the CPU cores, cache memories, and IOMMUs to the unique enclaves comprises:
establishing exclusive cryptographic links between each resource in the portion and only one of the unique enclaves, the exclusive cryptographic links being established based on the specific keys associated with each resource.

9. The system of claim 1, wherein pinning the portion of the CPU cores, cache memories, and IOMMUs to the unique enclaves comprises:
manipulating registers of bridging chips to assign hardware resource IDs of each of the CPU cores, cache memories, and IOMMUs in the portion to only one of the unique enclaves without sharing chip-level resource assignations with other of the plurality of virtual enclaves, and optionally, manipulating peripheral component interconnect cards to generate isolated domains.

10. The system of claim 1, wherein:
the plurality of virtual enclaves comprise hardened enclaves and secured enclaves; the hardened enclaves being loaded with operating system for cloud computing; and
the secured enclaves being loaded with a limited operating system configured to perform functions by operating a single-tenant physical server.

11. The system of claim 1, wherein launching the security runtime environment comprises disabling Option ROM, System Management Modes, and debug ports of the one or more processors.

12. The system of claim 1, wherein
the security runtime environment comprises cross-domain protections; and the one or more processors are further configured to deploy firewall policies rerouting requests from the plurality of virtual enclaves to specific chip-level resources based on header or payload processing.

13. The system of claim 12, wherein firewall policies comprise a state table determining SRAM registers or blocks that can be accessed by each of the plurality of virtual enclaves.

14. A computer-implemented method for processor virtualization, the method comprising operating one or more processors, the one or more processors configured according to any of claims 1 to 13.

15. A non-transitory computer-readable medium storing instructions that, when executed by one or more processors, configure the one or more processors to perform the computer-implemented method according to claim 14.
